# FASCICULE DE BREVET EUROPEEN

(11) **EP 2 558 305 B1**
(45) Date de publication et mention de la délivrance du brevet: **07.12.2016**
(21) Numéro de dépôt: 11730381.8
(22) Date de dépôt: 15.04.2011
(51) Int. Cl.: B44C 1/17

(54) **PROCEDE DE FABRICATION D'UN VITRAGE COMPORTANT UN FILM DECORATIF ET VITRAGE COMPORTANT UN FILM DECORATIF**
VERFAHREN ZUR HERSTELLUNG EINER VERGLASUNG MIT EINEM DEKORATIVEN FILM SOWIE VERGLASUNG MIT EINEM DEKORATIVEN FILM
METHOD FOR THE MANUFACTURE OF GLAZING COMPRISING A DECORATIVE FILM AND GLAZING COMPRISING A DECORATIVE FILM

(30) Priorité: 16.04.2010 FR 1052906
(43) Date de publication de la demande: 20.02.2013
(73) Titulaire: Saint-Gobain Glass France, 92400 Courbevoie (FR)
(72) Inventeur: VERRAT-DEBAILLEUL, Adèle, F-60150 Villers Sur Coudun (FR); LEFEVRE, Pascal, F-02300 Viry Noureuil (FR); FROISSARD, Loïc, F-60750 Choisy-au-Bac (FR)
(74) Mandataire: Saint-Gobain Recherche
(86) Numéro de dépôt international: PCT/FR2011/050871
(87) Numéro de publication internationale: WO 2011/128603

(56) Documents cités:
- EP-A2- 0 371 810
- EP-A2- 1 052 115
- WO-A1-00/09332
- WO-A1-98/08694
- WO-A1-98/43832

## Description

La présente invention se rapporte au domaine de la fabrication de vitrages.

Elle concerne un procédé de fabrication d'un vitrage comportant un élément vitré muni d'une portion d'un cordon profilé, ledit vitrage présentant au moins une partie souple et une partie dure, ladite partie souple appartenant audit cordon profilé et ladite partie dure appartenant audit élément vitré ou audit cordon profilé.

La présente invention se rapporte en particulier à la fabrication de vitrages comportant au moins un élément décoratif qui se distingue visuellement de l'apparence du reste du vitrage.

L'art antérieur connaît de la demande internationale de brevet N° WO 2005/033526 un système de clipage de profilé enjoliveur décoratif pour cordon profilé utilisant un clip souple présentant un premier bossage simple destiné à être introduit dans une première rainure simple du cordon profilé et un deuxième bossage plus complexe, en forme de crochet, destiné à être introduit dans une rainure également plus complexe du cordon profilé par déformation du clip souple. Le clip est ainsi crocheté sur le cordon profilé. Un effet de pinçage du cordon profilé est par ailleurs obtenu en réalisant une distance légèrement plus courte entre les deux bossages du clip qu'entre les deux rainures du cordon profilé.

Dans cette solution, la décoration est donc réalisée par clipage d'une pièce décorative (le profilé enjoliveur) sur le cordon profilé du vitrage.

Ce système donne satisfaction, mais il oblige à prévoir une double fourniture : en pièce décorative et en clip.

Il est connu par ailleurs de la demande internationale de brevet N° WO 2009/068624, un procédé et dispositif de collage d'une pièce décorative, sans utiliser de clip intermédiaire.

Toutefois l'utilisation d'une quantité importante de colle entre le vitrage et la pièce décorative impose des contraintes fortes d'hygiène et de sécurité dans les ateliers de fabrication et engendre un coût financier élevé.

L'art antérieur connaît par ailleurs de la demande de brevet européen N° EP 371 810 une technologie particulière et complexe : un cordon profilé est d'abord préfabriqué, puis le vitrage est disposé dans un moule avec ce cordon profilé et des ondes hautes fréquences sont envoyées dans des zones prédéterminées du moule pour chauffer le cordon profilé et provoquer une évaporation et une expansion d'une partie en mousse du cordon profilé.

L'art antérieur connaît par ailleurs de la demande internationale de brevet N° WO 98/43832 une technologie dite en anglais « decal deposition » ; en réalité, le sujet de ce document est ce que l'homme du métier nomme de la sérigraphie d'émail car les températures utilisées pour marquer l'élément vitré sont très élevées (plus de 500 °C).

Le but de l'invention est de pallier les inconvénients de l'art antérieur en proposant un système de décoration de vitrages qui soit simple, facile à mettre en oeuvre et peu onéreux.

La présente invention se rapporte ainsi dans son acception la plus large à un procédé de fabrication d'un vitrage selon la revendication 1. Le vitrage ainsi fabriqué comporte un élément vitré muni d'une portion d'un cordon profilé, ledit vitrage présentant au moins une partie souple et une partie dure, ladite partie souple appartenant audit cordon profilé et ladite partie dure appartenant audit élément vitré ou audit cordon profilé ; Selon l'invention au moins un film comportant un substrat présentant une face arrière et une face avant sur laquelle est positionné un revêtement décoratif est appliqué sur ledit vitrage en opérant successivement les étapes suivantes :
a- le vitrage est positionné sur un support comportant une contre-forme,
b- le film est pressé au moins partiellement contre une partie souple du cordon profilé du vitrage, et notamment une partie du cordon profilé qui est souple et en saillie (pas en creux), la partie souple présentant une dureté de 55 à 95 Shore A, en appliquant au moins un poinçon contre la face
   arrière du substrat,
c- ce poinçon est relevé et
d- ledit substrat est retiré,
ledit revêtement décoratif adhérant alors audit vitrage.

Par « revêtement décoratif » au sens de la présente invention, il faut comprendre que l'élément présente une épaisseur fine, de l'ordre de 0,1 à 1 mm. Cet élément est relativement souple car il comporte une matrice en polymère. Il ne peut pas être constitué d'une feuille de métal ou d'alliage métallique.Seul ce revêtement décoratif adhère au vitrage ; le substrat porteur du revêtement décoratif avant l'application du revêtement décoratif est retiré de ce revêtement décoratif pour être ensuite jeté ou recyclé.

Par « partie du cordon profilé qui est en saillie », au sens de la présente invention, il faut comprendre qu'une partie au moins du cordon sur laquelle est pressé le film et sur laquelle le revêtement décoratif adhère est une partie qui se trouve en saillie par rapport à la face extérieure de l'élément vitré, c'est-à-dire qui se situe plus à l'extérieur que la face extérieure de l'élément vitré ; cette partie ne se trouve donc pas dans la continuité de la face extérieur, ni plus à l'intérieur que la face extérieur de l'élément vitré, en vis-à-vis du chant de l'élément vitré ni plus à l'intérieur encore.

Une particularité importante de la présente invention consiste à prévoir que pendant l'étape b le poinçon presse le film au moins partiellement contre une partie souple du cordon profilé et éventuellement en même temps :
- le poinçon presse le film au moins partiellement contre une partie dure du cordon profilé et/ou
- le poinçon presse le film au moins partiellement contre une portion d'une face dudit élément vitré (ladite portion de face étant une partie dure d'un élément vitré en verre minéral ou en matière organique).

Toutefois, il est préférable que le poinçon presse le film en totalité contre une partie souple du cordon profilé car il est plus difficile de gérer l'application d'un film sur une surface présentant deux zones distinctes avec des propriétés de dureté différentes.

Le revêtement adhère de préférence à une partie souple de la face extérieure du cordon profilé qui est en saillie par rapport à une autre partie de la face extérieure du cordon profilé ; cette autre partie peut être souple ou rigide.

Dans une variante de l'invention, lorsque le vitrage est positionné sur un support, ladite partie souple est positionnée sur ladite contre-forme.

Dans une variante de l'invention, pendant l'étape b le poinçon presse le film au moins partiellement contre une face extérieure de la partie souple du cordon profilé, avec une face intérieure de la partie souple du cordon profilé qui est maintenue par la contre-forme.

De préférence, par ailleurs, pendant l'étape b au moins, voire pendant toutes les étapes, le poinçon est chauffé, avec de préférence un contrôle permanent de sa température.

Dans une variante préférée de l'invention, ledit film est enroulé sur un rouleau qui est déroulé avant le pressage du film contre le vitrage, le substrat étant alors, de préférence enroulé après le pressage du film.

Pendant l'étape b, le pressage est, de préférence, réalisé :
- pendant une durée comprise entre 1 et 20 secondes, voire entre 2 et 5 secondes et/ou
- à une pression comprise entre 0,1 et 10 MPa, voire entre 0,2 et 2 MPa et/ou
- à une température comprise entre 80 et 150 °C, voire entre 100 et 130 °C.

Le poinçon presse, de préférence, le film contre une partie souple du cordon profilé qui est courbée, avec éventuellement en même temps :
- le poinçon qui presse le film au moins partiellement contre une partie dure du cordon profilé qui est courbée et/ou
- le poinçon qui presse le film au moins partiellement contre une face dudit élément vitré qui est courbée.

Il est plus facile de presser le film contre une partie souple du cordon profilé qui est en saillie et non en creux.

Il est plus facile de presser le film contre une partie en saillie d'une face extérieure de la partie souple du cordon profilé, avec une face intérieure de la partie souple du cordon profilé qui est maintenue par la contre-forme.

Pendant cette étape b, il est possible que le poinçon presse le film contre plusieurs bords latéraux du vitrage et notamment contre tout le pourtour latéral du vitrage. Il est aussi possible d'utiliser plusieurs poinçons pressant chacun un film dans plusieurs endroits de chaque vitrage.

Au sens de la présente invention une partie souple est une partie qui présente un enfoncement lorsqu'elle est soumise à une pression à main nue, alors qu'une partie dure ne présente aucun enfoncement lorsqu'elle est soumise à une pression à main nue.

La contre-forme est nécessairement un élément de bâti qui ouvert, et non fermé, car il faut pouvoir appliquer le poinçon et le retirer.

Le poinçon est un élément plein ; ce n'est pas un écran ajouré comme ceux utilisés en sérigraphie ; la technique de l'invention n'est pas une technique de sérigraphie (qui utilise une encre).

Pour la mise en oeuvre du procédé selon la présente invention c'est possible de prévoir un dispositif de fabrication d'un vitrage, ledit dispositif comportant un élément vitré muni d'une portion d'un cordon profilé, ledit vitrage présentant au moins une partie souple et/ou une partie dure, ladite partie souple appartenant audit cordon profilé et ladite partie dure appartenant audit élément vitré ou audit cordon profilé. Ce dispositif comporte un support comportant d'une part une contre-forme accueillant ledit vitrage et d'autre part au moins un poinçon mobile pour venir presser au moins partiellement contre une partie souple du cordon profilé du vitrage un film comportant un substrat présentant une face arrière et une face avant sur laquelle est positionné un revêtement décoratif, afin que ledit revêtement décoratif adhère audit vitrage.

Dans ce dispositif, ledit poinçon comporte en outre, de préférence, une roulette montée mobile en rotation ou un coussin monté mobile en translation.

La présente invention se rapporte également au vitrage selon la revendication 11 comportant un élément vitré muni d'une portion d'un cordon profilé, ledit vitrage présentant au moins une partie souple et une partie dure, ladite partie souple appartenant audit cordon profilé et ladite partie dure appartenant audit élément vitré ou audit cordon profilé, et en particulier un vitrage obtenu par la mise en oeuvre du procédé selon l'invention, ce vitrage comportant au moins un revêtement décoratif adhérant à une partie souple du cordon profilé dudit vitrage, et notamment adhérant à une partie souple en saillie du cordon profilé dudit vitrage.

Ce vitrage comporte ainsi, au moins un revêtement décoratif adhérant à une partie souple du cordon profilé et éventuellement
- ledit revêtement adhérant à une partie dure du cordon profilé et/ou
- ledit revêtement adhérant à une face dudit élément vitré.

Dans une variante, ledit revêtement décoratif comporte une matrice pigmentée prise en sandwich entre une colle thermoactivable et une couche d'agent anti-adhérant. Cet agent est destiné à faciliter le retrait du substrat ; il est possible qu'il disparaisse ensuite du vitrage, notamment après un nettoyage intense.

Il est possible de réaliser let revêtement décoratif tel qu'il comporte une double courbure (une courbure longitudinale et une courbure transversale).

Ledit revêtement décoratif peut être situé sur un (ou plusieurs) bord(s) latéral(aux) du vitrage et notamment sur tout le pourtour latéral du vitrage, et en particulier ledit revêtement décoratif peut adhérer :
- à une partie souple du cordon profilé sur plusieurs bords latéraux du vitrage et/ou
- à une partie dure du cordon profilé sur plusieurs bords latéraux du vitrage et/ou
- à une face dudit élément vitré sur plusieurs bords latéraux du vitrage.

La présente invention se rapporte également à un ensemble de vitrages (ou une série de vitrages), et notamment un ensemble de vitrages de véhicule, comportant chacun un élément vitré éventuellement muni d'une portion d'un cordon profilé, chaque vitrage présentant au moins une partie souple et/ou une partie dure, ladite partie souple appartenant audit cordon profilé et ladite partie dure appartenant audit élément vitré ou audit cordon profilé.

Dans cet ensemble de vitrages (ou cette série de vitrages) selon l'invention, une partie seulement des vitrages de l'ensemble est obtenue par la mise en oeuvre du procédé selon l'invention.

Ainsi, lesdits vitrages de l'ensemble sont identiques sauf ce qu'une partie des vitrages de l'ensemble comporte chacun au moins un revêtement décoratif adhérant audit vitrage et qu'une autre partie des vitrages de l'ensemble ne comporte aucun revêtement décoratif ; il est par ailleurs possible qu'à l'intérieur de la partie des vitrages comportant au moins un revêtement décoratif, les vitrages ne présentent pas tous le même revêtement décoratif (revêtements de couleur différente et/ou d'aspect différent).

La présente invention se rapporte également à un ensemble de vitrages, et notamment un ensemble de vitrages de véhicule, selon l'invention comportant chacun un élément vitré muni d'une portion d'un cordon profilé, chaque vitrage présentant au moins une partie souple et une partie dure, ladite partie souple appartenant audit cordon profilé et ladite partie dure appartenant audit élément vitré ou audit cordon profilé, et lesdits vitrages de l'ensemble sont identiques sauf ce que des vitrages de l'ensemble comportent chacun au moins un revêtement décoratif différent.

Le procédé selon la présente invention peut être effectué en atelier de fabrication de vitrages et notamment en atelier de fabrication de vitrages de véhicule d'un dispositif comportant une machine d'estampage pour fabriquer des vitrages selon l'invention et notamment pour fabriquer des vitrages de véhicule.

La technologie s'estampage est certes connue, mais elle était appliquée jusqu'à maintenant sur des parties rigides, pas sur des parties souples.

Cette utilisation permet ainsi de fabriquer des vitrages identiques sauf en ce qu'une partie des vitrages comporte chacun au moins un revêtement décoratif adhérant audit vitrage et qu'une autre partie des vitrages ne comporte aucun revêtement décoratif ; il est par ailleurs possible qu'à l'intérieur de la partie des vitrages comportant au moins un revêtement décoratif, les vitrages ne présentent pas tous le même revêtement décoratif (revêtements de couleur différente et/ou d'aspect différent).

Avantageusement, un tel système permet de réaliser des vitrages décorés d'un revêtement de décoration d'une manière simple, précise et peu onéreuse, en diminuant fortement les risques relatif à l'hygiène et la sécurité dans les ateliers de fabrication.

Avantageusement en outre, la solution selon l'invention permet de proposer au constructeur automobile un seul dessin de cordon profilé ou un seul dessin de vitrage, que ce cordon profilé ou ce vitrage soit décoré d'un revêtement de décoration ou non ; en effet, avec les systèmes de l'art antérieur à enjoliveur clipé ou collé, si le constructeur veut pouvoir proposer pour un même type de véhicule une version avec vitrage décoré et une version avec vitrage sans décoration, il fallait concevoir deux sortes de vitrages : une sorte de vitrage avec des moyens spécifiques (creux, bossage, piste de collage, ...) pour la fixation de l'enjoliveur et une sorte de vitrage sans ces moyens.

Avantageusement par ailleurs, la présente invention propose une solution pour décorer des parties souples de vitrages, ce qui n'était pas possible jusqu'à maintenant. En effet, un clipage d'enjoliveur ne peut être réalisé sur une partie souple, comme une lèvre saillant à l'extérieur du chant du vitrage car le risque de déclipage lorsque le véhicule roule est trop grand ; de même, le collage d'une pièce massive risque de ne pas être suffisamment efficace et l'enjoliveur risque de se décoller. D'une manière surprenante, il a été découvert qu'il était possible d'appliquer un revêtement décoratif sur une partie souple : ce revêtement, du fait de sa faible épaisseur va suivre la déformation de la partie souple (dont le but premier est qu'elle se déforme) et la fonction de décoration va être conservée dans le temps.

La présente invention sera mieux comprise à la lecture de la description détaillée ci-après d'exemples de réalisation non limitatifs et des figures ci-jointes :
- La figure 1 illustre une vue schématique en coupe de la première étape essentielle du procédé de fabrication d'un vitrage selon l'invention ;
- La figure 2 illustre une vue schématique en coupe de la deuxième étape essentielle du procédé de fabrication d'un vitrage selon l'invention ;
- La figure 3 illustre une vue schématique en coupe de la troisième étape essentielle du procédé de fabrication d'un vitrage selon l'invention ;
- La figure 4 illustre une vue schématique en coupe d'une quatrième étape du procédé de fabrication d'un vitrage selon l'invention qui pourrait éventuellement être opérée en même temps que la troisième étape ;
- La figure 5 illustre une vue schématique en coupe d'une première variante de réalisation du vitrage selon l'invention après le cycle de fabrication des figures 1 à 4 ;
- La figure 6 illustre une vue schématique en coupe d'une variante de réalisation du vitrage selon l'invention consistant en une combinaison de la première et de la seconde variante ; et
- Les figures 7 et 8 illustrent chacune une vue schématique en perspective d'un vitrage respectivement avant application d'un revêtement décoratif et après application d'un revêtement décoratif sur deux bords latéraux adjacents du vitrage.

Dans ces figures, les proportions entre les différents éléments ne sont pas respectées et les éléments en arrière plan ne sont en général pas représentés, afin de faciliter leur lecture.

La présente invention se rapporte à la fabrication d'un vitrage et notamment d'un vitrage de véhicule et en en particulier à la fabrication d'un vitrage de véhicule automobile.

Le vitrage 1 selon l'invention comporte un élément vitré 2 qui est rigide et dur et qui est muni d'une portion d'un cordon profilé 3, ledit vitrage 1 présentant au moins une partie souple et une partie dure, ladite partie souple appartenant audit cordon profilé 3 et ladite partie dure appartenant audit élément vitré 2 ou audit cordon profilé 3.

Le vitrage, qui est constitué au moins de l'élément vitré et du cordon profilé, ainsi que éventuellement d'accessoires et notamment d'accessoires de fixation du vitrage, est destiné à fermer une baie réalisant une séparation entre un espace intérieur et un espace extérieur. L'élément vitré présente ainsi une face intérieure, destinée à être tournée vers l'espace intérieur, une face extérieure destinée à être tournée vers l'espace extérieur, ainsi qu'un chant périphérique.

L'élément vitré peut être monolithique, c'est-à-dire constitué d'une feuille de matière unique, ou être composite, c'est-à-dire constitué de plusieurs feuilles de matière entre lesquelles est insérée au moins une couche de matière adhérente dans le cas des vitrages feuilletés, ou entre lesquelles est présent au moins un espace intercalaire dans le cas des vitrages multiples (doubles vitrages, triples vitrages, ...). La (ou les) feuille(s) de matière peut (ou peuvent) être minérale(s), notamment en verre, ou organique(s), notamment en matière plastique.

Dans le cas d'un vitrage pour véhicule, le vitrage présente généralement au moins partiellement à sa périphérie une bande d'ornementation, non illustrée ici. Cette bande d'ornementation résulte en général d'un dépôt d'émail, réalisé sur la face intérieure du vitrage ou sur une face intercalaire du vitrage pour les vitrages composites, mais elle peut également résulter d'une coloration partielle et/ou périphérique d'une feuille de matière utilisée, notamment d'une feuille en matière organique.

Lorsque l'élément vitré est en matière organique, il a été fabriqué préalablement par moulage de la matière constitutive de l'élément vitré dans un dispositif de moulage comportant un moule comportant au moins une partie fixe de moule et une partie mobile de moule qui est mobile par rapport à la partie fixe de moule, lesdites parties de moule coopérant à l'état fermé du moule, pendant l'étape de moulage, pour former une cavité de moulage présentant en coupe la forme en coupe de l'élément vitré. Souvent, l'élément vitré en matière organique n'est pas plat mais bombé.

Lorsque l'élément vitré est en matière minérale, il a été fabriqué par fusion de matière minérale en une feuille plate, puis par découpe de cette feuille et éventuellement bombage de cette feuille.

Pour information, la fabrication d'un élément vitré en matière organique est plus onéreuse que la fabrication d'un élément vitré est en matière minérale et le premier mode de fabrication est en général choisi lorsque la forme de l'élément vitré est tellement complexe qu'elle ne peut pas être réalisée par bombage d'un élément vitré en matière minérale ou alors lorsqu'il est souhaité que l'élément vitré soit léger.

Lorsque l'élément vitré est un élément vitré composite, il a été fabriqué selon la technique bien connue de fabrication des vitrages multiples ou des vitrages feuilletés, éventuellement bombés.

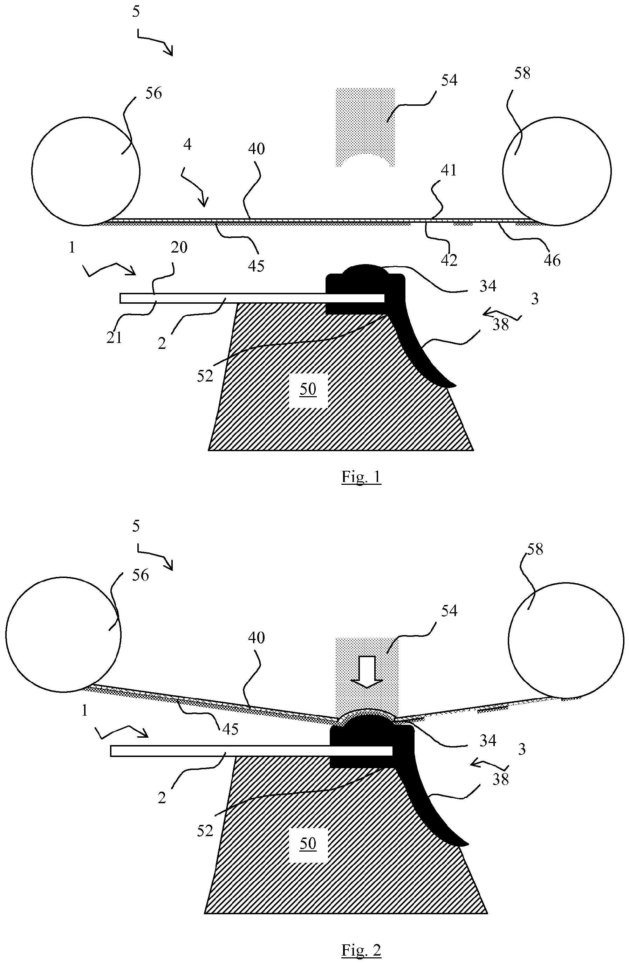

Sur les figures 1 à 6, ce n'est pas un élément vitré complet qui est dessiné, mais uniquement un bord latéral d'un élément vitré qui est monolithique : ce pourrait être un bord gauche ou droit, un bord avant ou arrière, ou un bord haut ou bas (l'orientation étant ici par rapport à un véhicule automobile et selon son sens d'avancé, comme connu).

Le vitrage comporte un cordon profilé qui a été préalablement fabriqué en un matériau en matière plastique par moulage à la périphérie de l'élément vitré pour former un vitrage et notamment un vitrage de véhicule.

La matière plastique constitutive du cordon profilé peut être un thermoplastique (PVC, TPE, ...), un polyuréthanne ou encore un caoutchouc synthétique du type EPDM ou toute autre matière adéquate.

Le cordon profilé est généralement disposé sur toute la périphérie des bords latéraux de l'élément vitré mais ce cordon profilé pourrait tout à fait n'être positionné que sur une partie de la périphérie du vitrage ou sur une partie quelconque du vitrage.

Le cordon profilé a été fabriqué préalablement par mise en oeuvre d'un procédé de fabrication appelé « encapsulation » car il comporte une étape de moulage du cordon profilé dans un dispositif de moulage comportant un moule comportant au moins une partie fixe de moule et une partie mobile de moule qui est mobile par rapport à la partie fixe de moule, lesdites parties de moule coopérant à l'état fermé du moule, pendant l'étape de moulage, avec ledit élément vitré pour former une cavité de moulage présentant en coupe la forme du profil du cordon profilé.

Selon l'invention, pour fabriquer le vitrage 1, après fabrication de l'élément vitré et après fabrication du cordon profilé, un revêtement décoratif est attaché à une partie souple, voire à une partie souple et une partie dure du vitrage, en utilisant un film 4 comportant un substrat 40 présentant une face arrière 41 et une face avant 42 sur laquelle est positionné un revêtement décoratif 45.

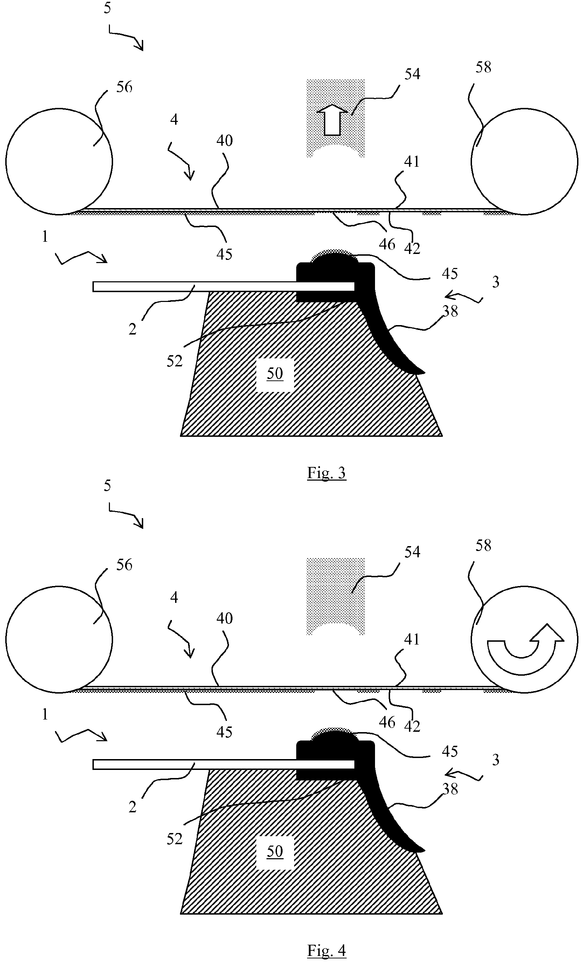

Pour ce faire, quatre étapes essentielles sont successivement mises en oeuvre :
a- première étape essentielle (positionnement) : le vitrage est tout d'abord positionné sur un support 50 d'un dispositif de fabrication 5 qui comporte une contre-forme 52 qui accueille le vitrage, comme visible sur la figure 1 ;
b- deuxième étape essentielle (pressage) : au moins un poinçon 54 est positionné contre une face arrière 41 du substrat 40 et le film 4 est pressé contre le vitrage par le poinçon 54 pour désolidariser le revêtement décoratif du substrat et appliquer le revêtement décoratif sur le vitrage, comme visible sur la figure 2 ;
c- troisième étape essentielle (retrait) : ce poinçon 54 est relevé pour mettre fin au contact film/ vitrage, comme visible sur la figure 3 et
d- quatrième étape essentielle (évacuation) : ledit substrat 40 est retiré afin d'évacuer la partie le film 4 qui ne comporte plus que le substrat 40 et qui ne comporte plus la portion du revêtement décoratif qui a été appliqué sur le vitrage, comme visible sur la figure 4.

Pour finaliser le cycle de production, avant de le reprendre à l'étape a, il faut bien sûr évacuer le vitrage ainsi fabriqué.

Par ailleurs, il est possible de réaliser les étapes c et d simultanément ou quasi-simultanément (c'est-à-dire entamer l'étape d alors que l'étape c n'est pas terminée) et il est possible de réaliser un nettoyage de l'élément vitré et/ou une application d'un primaire avant l'étape b de pressage.

C'est dans l'étape de pressage qu'une portion du revêtement décoratif 45 quitte le substrat 40 pour être disposée sur une partie du vitrage afin de décorer cette partie.

Ainsi, le revêtement 45 décoratif adhère alors au vitrage 1.

Plus précisément, pendant la deuxième étape essentielle, l'étape b :
- le poinçon 54 presse le film 4 au moins partiellement contre une partie souple 34 du cordon profilé 3 et/ou
- le poinçon 54 presse le film 4 au moins partiellement contre une partie dure 36 du cordon profilé 3 et/ou
- le poinçon 54 presse le film 4 au moins partiellement contre une portion d'une face 20, 21 dudit élément vitré 2 (ladite portion de face étant une partie dure d'un élément vitré en verre minéral ou en matière organique).

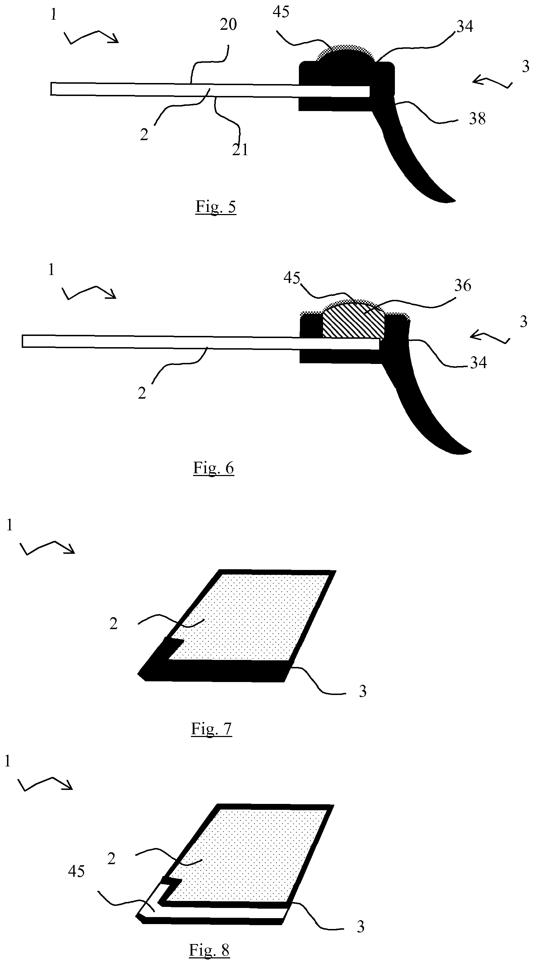

Ainsi, ledit revêtement 45 est situé sur un (ou éventuellement plusieurs) bord(s) latéral(aux) du vitrage 1 et notamment sur tout le pourtour latéral du vitrage 1, et en particulier le revêtement 45 adhère, sur un ou plusieurs bords latéraux du vitrage 1 :
- à une partie souple 34 du cordon profilé 3, comme visible en figure 5, ou
- à la fois à une partie souple 34 du cordon profilé 3 et à une partie dure 36 du cordon profilé 3, comme visible en figure 6.

Bien que cela ne soit pas illustré, il est également possible que le revêtement 45 adhère, sur un ou plusieurs bords latéraux du vitrage 1 :
- à la fois à une partie souple 34 du cordon profilé 3, et à une face 20, 21 de l'élément vitré 2, ou
- à la fois à une partie souple 34 du cordon profilé 3, à une partie dure 36 du cordon profilé 3 et à une ou plusieurs faces 20, 21 de l'élément vitré 2.

Les vitrages des figures 5 et 6 sont chacun munis d'une partie souple 34 qui se termine par une lèvre souple (référencée 38 en figure 5). Cette lèvre souple, destinée à venir au contact de la carrosserie, peut aussi comporter sur une partie de sa surface un revêtement décoratif selon l'invention.

D'une manière générale, il est considéré ici que les matières plastiques souples sont celles qui présentent, après mise en oeuvre, une dureté de 55 à 95 Shore A, comme par exemple les TPE, PVC, PU, EPDM, ... ; les matières plastiques dures sont celles qui présentent, après mise en oeuvre, une dureté supérieure à 95 Shore A, comme par exemple les PC, ABS, ABS-PC,

Sur la figure 7 est illustré un vitrage 1 comportant un élément vitré 2 et un cordon profilé 3 périphérique. Ce profilé est en matière plastique souple, mais il pourrait être avec une partie souple et une partie dure.

Sur la figure 8 est illustré le même vitrage 1, après mise en oeuvre du procédé selon l'invention : un revêtement décoratif unique 45 a été appliqué sur le cordon profilé 3, sur deux bords latéraux adjacents du vitrage : le bord bas, ainsi qu'une partie du bord gauche. Ce revêtement a été appliqué en ne réalisant qu'une seule fois l'étape b de pressage.

Le dispositif 5 de fabrication visible sur les figures 1 à 4, comporte ainsi un support 50 reposant sur le sol et comporte d'une part une contre-forme 52 fixée au support accueillant ledit vitrage 1 pendant la fabrication et d'autre part au moins un poinçon 54 mobile pour venir presser le film 4 contre le vitrage 1.

Comme visible sur ces figures, le poinçon 54, par exemple en silicone, comporte un coussin monté mobile en translation verticale, mais il pourrait aussi comporter une roulette montée mobile en rotation selon un axe horizontal.

Comme visible par ailleurs sur la figure 3, il est possible qu'il reste du revêtement décoratif 45 entre les empreintes 46 (emplacements du film 4 / substrat 40 en aval du poinçon lorsque l'on considère le sens d'avancé du film et où il n'y a plus le revêtement décoratif).

Toutefois, pour économiser de la matière de revêtement décoratif, il est préférable de prévoir le film 4 tel qu'il présente une largeur identique à la largeur souhaité du revêtement décoratif du vitrage lorsque cette largeur est constante sur toute la longueur du revêtement ; ainsi, si les bords transversaux du revêtement sont droits ou sont complémentaires l'un de l'autre, tout le revêtement décoratif du film est déposé sur le vitrage.

Comme visible sur la figure 4, le film 4 est enroulé sur un rouleau 56 qui est déroulé avant le pressage du film 4 contre le vitrage 1, et le substrat est ensuite enroulé sur un rouleau 58 après l'étape de retrait du poinçon. Ces deux rouleaux sont ici montés en rotation sur des axes horizontaux, le rouleau 58 de substrat étant ici entraîné en rotation précise à l'aide d'un moteur pas à pas (cette rotation est illustrée par la flèche sur ce rouleau 58) et le rouleau 56 de film 4 étant monté en rotation libre.

Après l'étape de retrait du poinçon, (figure 3) et l'étape de retrait du substrat (figure 4) le vitrage 1 peut être retiré du dispositif 5 et un nouveau vitrage 1 peut être positionné dans le dispositif comme dans la première étape et le cycle de fabrication peut recommencer.

Si le film 4 n'est pas changé, alors le vitrage suivant comportera le même revêtement 45 décoratif ; changer le film 4 permet d'appliquer un revêtement décoratif différent sur un élément vitré de la même série.

Il est à noter que lorsque le poinçon 54 presse le film 4 au moins partiellement contre une partie souple 34 du cordon profilé 3, comme illustré en figure 2, il est préférable que ladite partie souple 34 soit positionnée sur la contre-forme 52 afin de réaliser un contre-appui efficace lors de l'étape b de pressage. Cette contre-forme 52 présente ainsi un creux qui est dessiné et réalisé comme étant le négatif du vitrage à l'endroit de ladite partie souple, pour ne pas déformer cette partie souple pendant le pressage.

Dans le cas où le revêtement décoratif est muni d'une couche thermoactivable sur sa face non décorative, c'est-à-dire sur sa face en contact avec le substrat avant l'étape b de pressage, alors pendant cette pendant cette étape b de pressage au moins, voire en outre pendant l'étape a ou même pendant tout le cycle de fabrication, le poinçon 54 est chauffé.

Dans ce cas, le pressage peut alors être réalisé à une température comprise entre 80 et 150 °C, voire entre 100 et 130 °C, par exemple pendant une durée comprise entre 1 et 20 secondes, voire entre 2 et 5 secondes et par exemple à une pression comprise entre 0,1 et 10 MPa, voire entre 0,2 et 2 MPa.

Pour coller le revêtement décoratif sur le vitrage, il est aussi possible d'utiliser un rayonnement UV ou ultrasonique ; la durée et la pression du pressage peuvent alors être adaptés en conséquence.

Le film décoratif est, de préférence, constitué d'une matrice en matière plastique dans laquelle sont présentes des particules pigmentées de couleur et/ou d'aspect souhaité pour la décoration du vitrage. Le film décoratif est, de préférence, prédécoupé sur le substrat qui, lui, est continu.

Un avantage important du procédé selon l'invention est que le poinçon 54 peut presser le film 4 contre le vitrage 1 dans une zone du vitrage qui est courbée (c'est-à-dire non plate) et notamment le poinçon 54 peut presser le film 4 au moins partiellement contre une partie souple 34 du cordon profilé qui est courbée (c'est-à-dire non plate), comme visible en figure 5.

Dans ce cas, le poinçon présente alors une surface de contact dessinée et réalisée comme étant le négatif du vitrage à l'endroit du pressage.

Ceci est particulièrement avantageux lorsque l'élément vitré est en matière organique, car, comme expliqué précédemment, cette matière est en général choisie lorsque l'élément vitré présente une courbure telle qu'il ne peut pas être fabriqué industriellement par bombage d'un élément vitré en matière minérale.

Il est possible par ailleurs que le revêtement 45 décoratif comporte une double courbure, c'est-à-dire une courbure longitudinale et une courbure transversale, la longueur et la transversale considérées sur le vitrage étant perpendiculaires.

Le revêtement décoratif est de préférence appliquée dans une partie du cordon profilé qui fait saillie par rapport à l'élément vitré, et même de préférence encore appliquée dans une partie du cordon profilé qui fait saillie par rapport au reste de la face du cordon profilé qui n'est pas décorée avec le revêtement.

Ainsi, le revêtement est plus facile à appliquer.

Pour une même série de vitrage, le revêtement décoratif peut présenter différentes couleurs et/ou différents aspects (mat / brillant) ou ne pas être présent pour une partie des vitrages de la série.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Procédé de fabrication d'un vitrage (1) comportant un élément vitré (2) muni d'une portion d'un cordon profilé (3), ledit vitrage (1) présentant au moins une partie souple et une partie dure, ladite partie souple appartenant audit cordon profilé (3) et ladite partie dure appartenant audit élément vitré (2) ou audit cordon profilé (3), **caractérisé en ce qu'au** moins un film (4) comportant un substrat (40) présentant une face arrière (41) et une face avant (42) sur laquelle est positionné un revêtement décoratif (45) présentant une épaisseur de 0,1 à 1 mm est appliqué sur ledit vitrage (1) en opérant successivement les étapes suivantes :
a- le vitrage est positionné sur un support (50) comportant une contre-forme (52),
b- le film (4) est pressé au moins partiellement contre une partie souple (34) présentant une dureté de 55 à 95 Shore A, et notamment une partie souple en saillie, du cordon profilé en appliquant au moins un poinçon (54) contre la face arrière (41) du substrat (40),
c- ce poinçon (54) est relevé et
d- ledit substrat (40) est retiré,
ledit revêtement (45) décoratif adhérant alors audit vitrage (1).

2. Procédé de fabrication selon la revendication 1, **caractérisé en ce que** lorsque le vitrage est positionné sur un support (50), ladite partie souple (34) est positionnée sur ladite contre-forme (52).

3. Procédé de fabrication selon la revendication 2, **caractérisé en ce que** pendant l'étape b le poinçon (54) presse le film (4) au moins partiellement contre une face extérieure de la partie souple (34) du cordon profilé, avec une face intérieure de la partie souple (34) du cordon profilé qui est maintenue par la contre-forme (52) et notamment pendant l'étape b le poinçon (54) presse le film (4) au moins partiellement contre une partie en saillie d'une face extérieure de la partie souple (34) du cordon profilé, avec une face intérieure de la partie souple (34) du cordon profilé qui est maintenue par la contre-forme (52).

4. Procédé de fabrication selon l'une quelconque des revendications 1 à 3, **caractérisé en ce que** pendant l'étape b au moins, voire pendant toutes les étapes, le poinçon (54) est chauffé.

5. Procédé de fabrication selon l'une quelconque des revendications 1 à 4, **caractérisé en ce que** ledit film (4) est enroulé sur un rouleau (56) qui est déroulé avant le pressage du film (4) contre le vitrage (1).

6. Procédé de fabrication selon l'une quelconque des revendications 1 à 5, **caractérisé en ce que** pendant l'étape b, le pressage est réalisé pendant une durée comprise entre 1 et 20 secondes, voire entre 2 et 5 secondes.

7. Procédé de fabrication selon l'une quelconque des revendications 1 à 6, **caractérisé en ce que** pendant l'étape b, le pressage est réalisé à une pression comprise entre 0,1 et 10 MPa, voire entre 0,2 et 2 MPa.

8. Procédé de fabrication selon l'une quelconque des revendications 1 à 7, **caractérisé en ce que** pendant l'étape b, le pressage est réalisé à une température comprise entre 80 et 150 °C, voire entre 100 et 130 °C.

9. Procédé de fabrication selon l'une quelconque des revendications 1 à 8, **caractérisé en ce que** le poinçon (54) presse le film (4) au moins partiellement contre une partie souple (34) du cordon profilé qui est courbée.

10. Procédé de fabrication selon l'une quelconque des revendications 1 à 9, **caractérisé en ce que** le poinçon (54) presse le film (4) contre plusieurs bords latéraux du vitrage (1) et notamment contre tout le pourtour latéral du vitrage (1).

11. Vitrage (1) comportant un élément vitré (2) muni d'une portion d'un cordon profilé (3), ledit vitrage (1) présentant au moins une partie souple et une partie dure, ladite partie souple appartenant audit cordon profilé (3) et ladite partie dure appartenant audit élément vitré (2) ou audit cordon profilé (3), et en particulier un vitrage (1) obtenu par la mise en oeuvre du procédé selon l'une quelconque des revendications 1 à 10, **caractérisé en ce qu'il** comporte au moins un revêtement (45) décoratif présentant une épaisseur de 0,1 à 1 mm et adhérant à une partie souple (34) du cordon profilé qui présente une dureté de 55 à 95 Shore A, et notamment adhérant à une partie souple en saillie du cordon profilé.

12. Vitrage (1) selon la revendication 11, **caractérisé en ce que** ledit revêtement (45) décoratif adhérant en plus :
- à une partie dure du cordon profilé et/ou
- à une face dudit élément vitré.

13. Vitrage (1) selon la revendication 11 ou 12, **caractérisé en ce que** ledit revêtement (45) comporte une matrice pigmentée prise en sandwich entre une colle thermoactivable et une couche d'agent démoulant.

14. Vitrage (1) selon l'une quelconque des revendications 11 à 13, **caractérisé en ce que** ledit revêtement (45) comporte une double courbure.

15. Vitrage (1) selon l'une quelconque des revendications 11 à 14, **caractérisé en ce que** ledit revêtement (45) est situé sur plusieurs bords latéraux du vitrage (1) et notamment sur tout le pourtour latéral du vitrage (1), et en particulier ledit revêtement (45) adhérant à une partie souple (34) du cordon profilé sur plusieurs bords latéraux du vitrage (1)

16. Ensemble de vitrages (1), et notamment un ensemble de vitrages de véhicule, comportant chacun un élément vitré (2) muni d'une portion d'un cordon profilé (3), chaque vitrage (1) présentant au moins une partie souple et/ou une partie dure, ladite partie souple appartenant audit cordon profilé (3) et ladite partie dure appartenant audit élément vitré (2) ou audit cordon profilé (3), **caractérisé en ce que** lesdits vitrages de l'ensemble sont identiques sauf ce qu'une partie des vitrages de l'ensemble comporte chacun au moins un revêtement (45) décoratif adhérant audit vitrage (1) selon l'une quelconque des revendications 11 à 15 et qu'une autre partie des vitrages de l'ensemble ne comporte aucun revêtement décoratif.

17. Ensemble de vitrages (1), et notamment un ensemble de vitrages de véhicule, chaque vitrage étant un vitrage selon l'une quelconque des revendications 11 à 15, **caractérisé en ce que** lesdits vitrages de l'ensemble sont identiques sauf ce que des vitrages de l'ensemble comportent chacun au moins un revêtement (45) décoratif différent.

## Patentansprüche

1. Verfahren zur Herstellung einer Verglasung (1) mit einem Scheibenelement (2), das mit einem Abschnitt eines Profilstrangs (3) versehen ist, wobei die Verglasung (1) mindestens einen flexiblen Teil und einen harten Teil aufweist, wobei der flexible Teil dem Profilstrang (3) zugehörig ist und der harte Teil dem Scheibenelement (2) oder dem Profilstrang (3) zugehörig ist, **dadurch gekennzeichnet, dass** mindestens eine Folie (4), die ein Substrat (40) mit einer rückseitigen Fläche (41) und einer vorderseitigen Fläche (42) aufweist, auf der ein dekorativer Überzug (45) mit einer Dicke von 0,1 bis 1 mm positioniert ist und auf die Verglasung (1) aufgebracht wird, indem die folgenden Schritte nacheinander ausgeführt werden:
a die Verglasung wird auf einem Träger (50) positioniert, der eine Gegenform (52) aufweist,
b die Folie (4) wird mindestens teilweise gegen einen flexiblen Teil (34) mit einer Shore-Härte A von 55 bis 95, und insbesondere einen vorspringenden flexiblen Teil, des Profilstrangs angepresst, indem mindestens ein Stempel (54) gegen die rückseitige Fläche (41) des Substrats (40) aufgedrückt wird,
c dieser Stempel (54) wird angehoben und
d das Substrat (40) wird entfernt,
wobei der dekorative Überzug (45) dann an der Verglasung (1) anhaftet.

2. Herstellungsverfahren nach Anspruch 1, **dadurch gekennzeichnet, dass**, wenn die Verglasung auf einem Träger (50) positioniert wird, der flexible Teil (34) auf der Gegenform (52) positioniert wird.

3. Herstellungsverfahren nach Anspruch 2, **dadurch gekennzeichnet, dass** während des Schrittes b der Stempel (54) die Folie (4) mindestens teilweise gegen eine Außenfläche des flexiblen Teils (34) des Profilstrangs anpresst, mit einer Innenfläche des flexiblen Teils (34) des Profilstrangs, die durch die Gegenform (52) gehalten wird, und insbesondere während des Schrittes b der Stempel (54) die Folie (4) mindestens teilweise gegen einen vorspringenden Teil einer Außenfläche des flexiblen Teils (34) des Profilstrangs anpresst, mit einer Innenfläche des flexiblen Teils (34) des Profilstrangs, die durch die Gegenform (52) gehalten wird.

4. Herstellungsverfahren nach einem der Ansprüche 1 bis 3, **dadurch gekennzeichnet, dass** mindestens während des Schrittes b, oder sogar während sämtlicher Schritte, der Stempel (54) aufgeheizt wird.

5. Herstellungsverfahren nach einem der Ansprüche 1 bis 4, **dadurch gekennzeichnet, dass** die Folie (4) auf eine Walze (56) aufgewickelt wird, die vor dem Anpressen der Folie (4) gegen die Verglasung (1) abgewickelt wird.

6. Herstellungsverfahren nach einem der Ansprüche 1 bis 5, **dadurch gekennzeichnet, dass** während des Schrittes b das Anpressen während eines Zeitraums zwischen 1 und 20 Sekunden, oder sogar zwischen 2 und 5 Sekunden, erfolgt.

7. Herstellungsverfahren nach einem der Ansprüche 1 bis 6, **dadurch gekennzeichnet, dass** während des Schrittes b das Anpressen bei einem Druck zwischen 0,1 und 10 MPa, oder sogar zwischen 0,2 und 2 MPa, erfolgt.

8. Herstellungsverfahren nach einem der Ansprüche 1 bis 7, **dadurch gekennzeichnet, dass** während des Schrittes b das Anpressen bei einer Temperatur zwischen 80 und 150 °C, oder sogar zwischen 100 und 130 °C, erfolgt.

9. Herstellungsverfahren nach einem der Ansprüche 1 bis 8, **dadurch gekennzeichnet, dass** der Stempel (54) die Folie (4) mindestens teilweise gegen einen flexiblen Teil (34) des Profilstrangs anpresst, der gekrümmt ist.

10. Herstellungsverfahren nach einem der Ansprüche 1 bis 9, **dadurch gekennzeichnet, dass** der Stempel (54) die Folie (4) gegen mehrere seitliche Ränder der Verglasung (1) und insbesondere gegen den gesamten seitlichen Umfang der Verglasung (1) anpresst.

11. Verglasung (1) mit einem Scheibenelement (2), das mit einem Abschnitt eines Profilstrangs (3) versehen ist, wobei die Verglasung (1) mindestens eines flexiblen Teil und einen harten Teil aufweist, wobei der flexible Teil dem Profilstrang (3) zugehörig ist und der harte Teil dem Scheibenelement (2) oder dem Profilstrang (3) zugehörig ist, und insbesondere eine Verglasung (1), die durch Durchführung des Verfahrens nach einem der Ansprüche 1 bis 10 erhalten wird, **dadurch gekennzeichnet, dass** sie einen dekorativen Überzug (45) aufweist, der eine Dicke von 0,1 bis 1 mm aufweist und an einem flexiblen Teil (34) des Profilstrangs anhaftet, der eine Shore-Härte A von 55 bis 95 aufweist und insbesondere an einem vorspringenden flexiblen Teil des Profilstrangs anhaftet.

12. Verglasung (1) nach Anspruch 11, **dadurch gekennzeichnet, dass** der dekorative Überzug (45) des Weiteren anhaftet
- an einem harten Teil des Profilstrangs und/oder
- an einer Fläche des Scheibenelements.

13. Verglasung (1) nach Anspruch 11 oder 12, **dadurch gekennzeichnet, dass** der Überzug (45) eine pigmentierte Matrix aufweist, die zwischen einem thermoaktivierbaren Klebstoff und einer Entformungsmittelschicht sandwichartig in Eingriff genommen wird.

14. Verglasung (1) nach einem der Ansprüche 11 bis 13, **dadurch gekennzeichnet, dass** der Überzug (45) eine doppelte Krümmung aufweist.

15. Verglasung (1) nach einem der Ansprüche 11 bis 14, **dadurch gekennzeichnet, dass** der Überzug (45) sich auf mehreren seitlichen Rändern der Verglasung (1) und insbesondere auf dem gesamten seitlichen Umfang der Verglasung (1) befindet und wobei der Überzug (45) insbesondere an einem flexiblen Teil (34) des Profilstrangs auf mehreren seitlichen Rändern der Verglasung (1) anhaftet.

16. Anordnung aus Verglasungen (1), und insbesondere eine Anordnung aus Fahrzeugverglasungen, die jede ein Scheibenelement (2) aufweisen, das mit einem Abschnitt eines Profilstrangs (3) versehen ist, wobei jede Verglasung (1) mindestens eines flexiblen Teil und/oder einen harten Teil aufweist, wobei der flexible Teil dem Profilstrang (3) zugehörig ist und der harte Teil dem Scheibenelement (2) oder dem Profilstrang (3) zugehörig ist, **dadurch gekennzeichnet, dass** die Verglasungen der Anordnung identisch sind, außer dass ein Teil der Verglasungen der Anordnung jede mindestens einen dekorativen Überzug (45) aufweist, der an der Verglasung (1) nach einem der Ansprüche 11 bis 15 anhaftet, und dass ein anderer Teil der Verglasungen der Anordnung keinen dekorativen Überzug aufweist.

17. Anordnung aus Verglasungen (1), und insbesondere eine Anordnung aus Fahrzeugverglasungen, wobei jede Verglasung eine Verglasung nach einem der Ansprüche 11 bis 15 ist, **dadurch gekennzeichnet, dass** die Verglasungen der Anordnung identisch sind, außer dass Verglasungen der Anordnung jede mindestens einen unterschiedlichen dekorativen Überzug (45) aufweist.

## Claims

1. A process for manufacturing a glazing unit (1) comprising a glazed element (2) equipped with a portion of a profiled strip (3), said glazing unit (1) having at least one flexible part and one hard part, said flexible part belonging to said profiled strip (3) and said hard part belonging to said glazed element (2) or to said profiled strip (3), **characterized in that** at least one film (4) comprising a substrate (40) having a rear face (41) and a front face (42), on which a decorative coating (45) having a thickness of 0.1 to 1 mm is positioned, is applied to said glazing unit (1) by successively carrying out the following steps:
a- the glazing unit is positioned on a support (50) comprising a counter-form (52),
b- the film (4) is pressed at least partially against a flexible part (34) having a hardness from 55 to 95 Shore A, and in particular a protruding flexible part, of the profiled strip by applying at least one punch (54) against the rear face (41) of the substrate (40),
c- this punch (54) is raised and
d- said substrate (40) is withdrawn,
said decorative coating (45) then adhering to said glazing unit (1).

2. The manufacturing process as claimed in claim 1, **characterized in that** when the glazing unit is positioned on a support (50), said flexible part (34) is positioned on said counter-form (52).

3. The manufacturing process as claimed in claim 2, **characterized in that** during step b the punch (54) presses the film (4) at least partially against an outer face of the flexible part (34) of the profiled strip, with an inner face of the flexible part (34) of the profiled strip which is supported by the counter-form (52) and in particular during step b the punch (54) presses the film (4) at least partially against a protruding part of an outer face of the flexible part (34) of the profiled strip, with an inner face of the flexible part (34) of the profiled strip which is supported by the counter-form (52).

4. The manufacturing process as claimed in any one of claims 1 to 3, **characterized in that** during step b at least, or even during all the steps, the punch (54) is heated.

5. The manufacturing process as claimed in any one of claims 1 to 4, **characterized in that** said film (4) is wound on a roll (56) which is unwound before pressing the film (4) against the glazing unit (1).

6. The manufacturing process as claimed in any one of claims 1 to 5, **characterized in that** during step b, the pressing is carried out for a duration between 1 and 20 seconds, or even between 2 and 5 seconds.

7. The manufacturing process as claimed in any one of claims 1 to 6, **characterized in that** during step b, the pressing is carried out at a pressure between 0.1 and 10 MPa, or even between 0.2 and 2 MPa.

8. The manufacturing process as claimed in any one of claims 1 to 7, **characterized in that** during step b, the pressing is carried out at a temperature between 80 and 150°C, or even between 100 and 130°C.

9. The manufacturing process as claimed in any one of claims 1 to 8, **characterized in that** the punch (54) presses the film (4) at least partially against a flexible part (34) of the profiled strip which is curved.

10. The manufacturing process as claimed in any one of claims 1 to 9, **characterized in that** the punch (54) presses the film (4) against several lateral edges of the glazing unit (1) and in particular against the entire lateral perimeter of the glazing unit (1).

11. A glazing unit (1) comprising a glazed element (2) equipped with a portion of a profiled strip (3), said glazing unit (1) having at least one flexible part and one hard part, said flexible part belonging to said profiled strip (3) and said hard part belonging to said glazed element (2) or to said profiled strip (3), and in particular a glazing unit (1) obtained by the implementation of the process as claimed in any one of claims 1 to 10, **characterized in that** it comprises at least one decorative coating (45) having a thickness of 0.1 to 1 mm and that adheres to a flexible part (34) of the profiled strip that has a hardness from 55 to 95 Shore A, and in particular that adheres to a protruding flexible part of the profiled strip.

12. The glazing unit (1) as claimed in claim 11, **characterized in that** said decorative coating (45) adhering further
- to a hard part of the profiled strip and/or
- to a face of the said glazed element.

13. The glazing unit (1) as claimed in claim 11 or 12, **characterized in that** said coating (45) comprises a pigmented matrix sandwiched between a heat-activated adhesive and a layer of mold-release agent.

14. The glazing unit (1) as claimed in any one of claims 11 to 13, **characterized in that** said coating (45) comprises a double curvature.

15. The glazing unit (1) as claimed in any one of claims 11 to 14, **characterized in that** said coating (45) is located over several lateral edges of the glazing unit (1) and especially over the entire lateral perimeter of the glazing unit (1), and in particular said coating (45) adhering to a flexible part (34) of the profiled strip over several lateral edges of the glazing unit (1).

16. A set of glazing units (1), and in particular a set of vehicle glazing units, each comprising a glazed element (2) equipped with a portion of a profiled strip (3), each glazing unit (1) having at least one flexible part and/or one hard part, said flexible part belonging to said profiled strip (3) and said hard part belonging to said glazed element (2) or to said profiled strip (3), **characterized in that** said glazing units of the set are identical except that one portion of the glazing units of the set each comprises at least one decorative coating (45) adhering to said glazing unit (1) as claimed in any one of claims 11 to 15 and that another portion of the glazing units of the set does not comprise any decorative coating.

17. A set of glazing units (1), and in particular a set of vehicle glazing units, each glazing unit being a glazing unit as claimed in any one of claims 11 to 15, **characterized in that** said glazing units of the set are identical except that some glazing units of the set each comprise at least one different decorative coating (45).
